# EUROPÄISCHE PATENTSCHRIFT

(11) **EP 1 188 195 B1**
(45) Veröffentlichungstag und Bekanntmachung des Hinweises auf die Patenterteilung: **07.05.2003**
(21) Anmeldenummer: 00942050.6
(22) Anmeldetag: 10.06.2000
(51) Int. Cl.: H01M 4/24, H01M 4/98, H01M 4/38, H01M 4/62

(54) **ELEKTRODE MIT SPEICHERVERMÖGEN FÜR WASSERSTOFF UND VERFAHREN ZU IHRER HERSTELLUNG**
ELECTRODE CAPABLE OF STORING HYDROGEN AND A METHOD FOR THE PRODUCTION OF THE SAME
ELECTRODE A CAPACITE DE STOCKAGE D'HYDROGENE, ET SON PROCEDE DE PRODUCTION

(30) Priorität: 29.06.1999 DE 19929949
(43) Veröffentlichungstag der Anmeldung: 20.03.2002
(73) Patentinhaber: Deutsche Automobilgesellschaft mbH, 38112 Braunschweig (DE)
(72) Erfinder: BENCZUR-ÜRMÖSSY, Gabor, D-70199 Stuttgart (DE); OHMS, Detlef, D-37603 Holzminden (DE); WAIDELICH, Dagmar, D-71364 Winnenden-Hanweiler (DE)
(74) Vertreter: Brückner, Ingo, Dipl.-Ing.
(86) Internationale Anmeldenummer: EP0005376
(87) Internationale Veröffentlichungsnummer: WO01001503

(56) Entgegenhaltungen:
- EP-A- 0 277 332
- EP-A- 0 735 093
- US-A- 5 682 592
- "Manufacture of hydrogen-absorbing alloy anodes for alkaline secondary batteries" CHEMICAL ABSTRACTS + INDEXES,US,AMERICAN CHEMICAL SOCIETY. COLUMBUS, Bd. 119, 9. August 1993 (1993-08-09), XP000401008 ISSN: 0009-2258

## Beschreibung

Die vorliegende Erfindung betrifft eine Elektrode mit Speichervermögen für Wasserstoff, mit einem metallischen Trägermaterial, auf welches eine aktive Masse aufgebracht ist. Die vorliegende Erfindung betrifft ferner ein Verfahren zur Herstellung einer derartigen Elektrode.

Eine gattungsgemäße Elektrode ist in der DE 37 02 138 Al beschrieben. Darin ist eine Elektrode mit Speichervermögen für Wasserstoff zur Durchführung von elektrochemischen und chemischen Reaktionen offenbart, die aus einer Mischung aus Raney-Nickel-Pulver und dem Pulver mindestens einer Wasserstoff-Speicherlegierung besteht, deren Körner mit fibrilliertem Polytetrafluorethylen (PTFE) überzogen sind. Dabei sind die Raney-Nickel- und Legierungskörner durch Walzen oder Pressen derart verdichtet, daß sie einen zusammenhängend elektronisch leitenden Körper bilden und durch das in den Zwickeln befindliche PTFE-Fibrillen-Netzwerk zusammengehalten werden.

Innerhalb des Elektrodenkörpers dieser Elektrode bilden sich in einer elektrochemischen Zelle zwei sich durchdringende Porensysteme aus, von denen das eine den Elektrolyt enthält und aus den Packungslücken zwischen den Raney-Nickel-Körnern und den Körnern der Wasserstoff-Speicherlegierung besteht und das andere aus den zusammenhängenden Zwickelräumen der Raney-Nickel-Körner gebildet und durch die hydrophobierende Wirkung des PTFE vom Elektrolyten nicht überflutet wird. Daher enthält dieses Porensystem Wasserstoff.

In dieser Druckschrift werden auch sogenannte kunststoffgebundene Wasserstoff-Speicherelektroden erwähnt, die beispielsweise gemäß DE-OS 27 27 200 aus dem Pulver einer Wasserstoff-Speicherlegie-rung, etwa des Systems Nickel-Titan oder Nickel-Lanthan, und PTFE als Binder in einem Knetprozeß hergestellt werden. Als nachteilig wird dabei bezeichnet, daß zwar eine wirksame elektrochemische Ladungsspeicherung möglich ist, welche aber mit einer verschlechterten Leistungsfähigkeit bzw. Funktion, d. h. mit einem schleppenden Gasumsatz einhergeht. Dies hängt vermutlich mit dem unporösen und hydrophoben Charakter der Elektrodenstruktur zusammen, so daß der elektrochemische Austausch zwischen Elektrolytlösung und der Legierungsphase nicht mehr einwandfrei funktioniert.

Die Raney-Nickel-Komponente setzt allerdings die spezifische Speicherkapazität dieser bekannten Elektrode gegenüber der kunststoffgebundenen Speicherelektrode wieder herab. Es wird jedoch angestrebt, in Akkumulatoren Elektroden mit besonders hoher spezifischer Speicherkapazität einzusetzen.

Die Aufgabe der vorliegenden Erfindung besteht daher darin, eine Elektrode der o. g. Art bereitzustellen, welche eine besonders gute spezifische Speicherkapazität und eine gute Leistungsfähigkeit aufweist. Die Aufgabe besteht ferner darin, ein Verfahren zur Herstellung einer solchen Elektrode bereitzustellen, welches einfach, schnell und kostengünstig ist.

Die Lösung besteht in einer Elektrode mit den Merkmalen des Anspruchs 1 bzw. in einem Verfahren mit den Merkmalen des Anspruchs 8.

Erfindungsgemäß ist also vorgesehen, das die aktive Masse aus einer Paste erhältlich ist, welche aus einem Trockenanteil und einem flüssigen Anteil zusammengesetzt ist. Der Trockenanteil enthält neben einer Wasserstoff-Speicherlegierung und PTFE auch Ruß; der flüssige Anteil enthält Wasser und einen Alkohol mit 3-6 C-Atomen, wobei die Partikel der Speicherlegierung fibrillenartig mit PTFE überzogen sind.

Die Rußbeigabe ist wichtig für die Verarbeitbarkeit der Mischung. Durch die Rußbeigabe wird die Mischung pastös und gleitfähig. In der Elektrode fördert der Ruß die elektrische Kontaktierung im Mikrobereich (bis etwa 500 µm), d. h. er überbrückt die Abstände und vermittelt den elektrischen Kontakt zwischen den Öffnungen oder Poren des Trägermaterials. Diese Abstände oder Öffnungen von bis zu 500µm Größe können von den Partikeln in der Paste bzw. der daraus erhältlichen aktiven Masse nicht überbrückt werden, da sie in der Regel einen Durchmesser von lediglich etwa 10 bis 100 µm aufweisen. Ferner sorgt der Ruß als Sauerstoffgetter für den Schutz der sauerstoffempfindlichen Speicherlegierung. Das PTFE ist verantwortlich für die hydrophoben Eigenschaften der Elektrode und ermöglicht die Einstellung der Dreiphasengrenze. In den nur teilweise benetzten Poren erfolgt die Reduktion des Sauerstoffs und die Abgabe und Aufnahme des Wasserstoffs in der arbeitenden Zelle. Das PTFE sorgt ferner für die Gleitfähigkeit und den Zusammenhalt der Paste im Misch- bzw. Formprozeß. Der Alkohol ist wiederum wichtig für die zeitweise Benetzung des PTFE-Pulvers, da sonst im Mischprozeß keine Verteilung durch Fibrillieren erfolgt.

Auf diese Weise wird erreicht, daß die Eigenschaften der kunststoffgebundenen Speicherelektroden mit ihrer hohen spezifischen Speicherkapazität und die Eigenschaften der Elektroden mit einer Mischung aus Speicherlegierung und Raney-Nickel-Pulver mit ihrer guten Leistungsfähigkeit bzw. Funktion kombiniert werden.

Das Verfahren zur Herstellung der erfindungsgemäßen Elektrode ist sehr einfach. Die Komponenten werden in einem Mischer bis zur Entstehung einer zusammenhängenden Paste gemischt. Die Paste wird geformt und mit dem metallischen Trägermaterial (bspw. Streckmetall, Gewebe, Gitter Lochblech) der Elektrode vereinigt. Dabei handelt es sich um eine außerordentlich einfache Prozeßführung.

Durch die erfindungsgemäße Elektrode ist es auch nicht mehr nötig, in herkömmlichen kunststoffgebundenen Speicherelektroden eine PTFE-Dispersion mit einem hohen Gehalt an Netzmittel einzusetzen, welches durch Zersetzung bei höherer Temperatur (300°C) entfernt werden muß, was die Speicherlegierung schädigt.

Vorteilhafte Weiterbildungen ergeben sich aus den Unteransprüchen. Im Trockenanteil sind etwa 85 - 95 Teile der Speicherlegierung, 2 - 10 Teile Ruß und 3 - 8 Teile PTFE enthalten. Im flüssigen Anteil sind 30 - 70 Volumenteile Wasser und 70 - 30 Volumenteile des Alkohols enthalten. Besonders gut geeignet sind dabei Alkohole mit einem Siedepunkt in der Größenordnung von 100°C, also bspw. n-Butanol oder n-Propanol.

Ferner kann im flüssigen Anteil Polyethylenglykol enthalten sein. Durch die PTFE-Komponente ist die fertiggeformte Elektrode durch Lauge nur äußerst schwer benetzbar. Zur Erzielung einer ausreichenden Elektrolytaufnahme kann mit dem Ansatzwasser daher ein Polyethylenglykol zugeführt werden. Der Anteil des Polyethylenglykols beträgt 0,05 - 0,2% (bezogen auf den Trockenanteil). Vorzugsweise wird ein Polyethylenglykol mit einem Molekulargewicht zwischen 10⁵ und 5 x 10⁵ g/mol verwendet. Als Alkohol wird vorzugsweise n-Propanol oder n-Butanol verwendet. Das Verhältnis des Trockenanteils zum flüssigen Anteil beträgt je nach Rußgehalt zwischen 4:1 und 6:1 auf Massenbasis.

Die erfindungsgemäße Elektrode findet vorzugsweise Verwendung in einem alkalischen Akkumulator mit positiver Nickeloxidelektrode.

Die Herstellung der erfindungsgemäßen Elektrode erfolgt durch Walzen einer teigartigen Paste auf einen strukturierten metallischen Träger, wie etwa ein Streckmetall oder Gitternetz. Die teigartige Paste wird in einem ersten Herstellungsschritt durch einen Misch- und Knetprozeß vorgefertigt. Die festen und flüssigen Komponenten werden in einem Kneter bis zur Entstehung einer zusammenhängenden Paste gemischt, beispielsweise in einem stabilen Haushaltskneter. Die PTFE-Partikel werden dabei durch die harten Verbindungskörner fibrilliert und halten die Paste zusammen. Die Formgebung zur Elektrode erfolgt durch Handwalzen oder in einer Walzstraße. Entweder wird ein Fell erzeugt und nach Trocknung mit dem Träger vereinigt oder die Knetmasse wird direkt auf den Träger aufgetragen und anschließend getrocknet.

Im folgenden wird ein Ausführungsbeispiel der vorliegenden Erfindung näher beschrieben.

Für die Herstellung einer walzfähigen Paste oder pastösen Masse wurden folgende Komponenten mit Wasser zusammengemischt:
- 68 Ma-% käufliche Wasserstoffspeicherlegierung (Lanthan-Mischmetall-Nickel-Legierung mit einer Korngröße kleiner 90 µm) ;
- 3,8 Ma-% Acetylenruß (Oberflächengröße 50-80 m²/g);
- 3,8 Ma-% PTFE-Pulver (Korngröße kleiner 50 µm) ;
- 10,9 Ma-% n-Propanol.

In dem zugesetzten Wasser war hochmolekulares Polyethylenglykol (bspw. mit einem Molekulargewicht von 5 x 10⁶ g/mol) in einer Konzentration von 0,65 Ma-% gelöst.

Diese Mischung wurde in einem Haushaltskneter 3 min geknetet und gemischt. Bei diesem Vorgang ballt sich die Masse zusammen und kann dem Walzvorgang zugeführt werden.

Auf einer Tischwalze wurde ein Fell mit einer Bahndicke von 1 mm erzeugt. Diese Fell-Bahn wurde in einem Vakuumtrockenschrank bei 100°C getrocknet. Die getrocknete Fell-Bahn wurde auf ein Trägermaterial (Nickelnetz oder Streckgitter aus Nikkel oder vernickeltem Kupfer) durch Walzen (Doppelwalze mit einer Spalteinstellung von 0,4 mm) aufgebracht.

Die fertige Elektrode hatte eine Enddicke von 0,5 mm. Bei einer Beschichtungsauflage von 0,17 g/cm² weist die Elektrode, als Wasserstoffspeicherelektrode in 6 M KOH betrieben, eine Kapazität von 43 mAh/cm² auf.

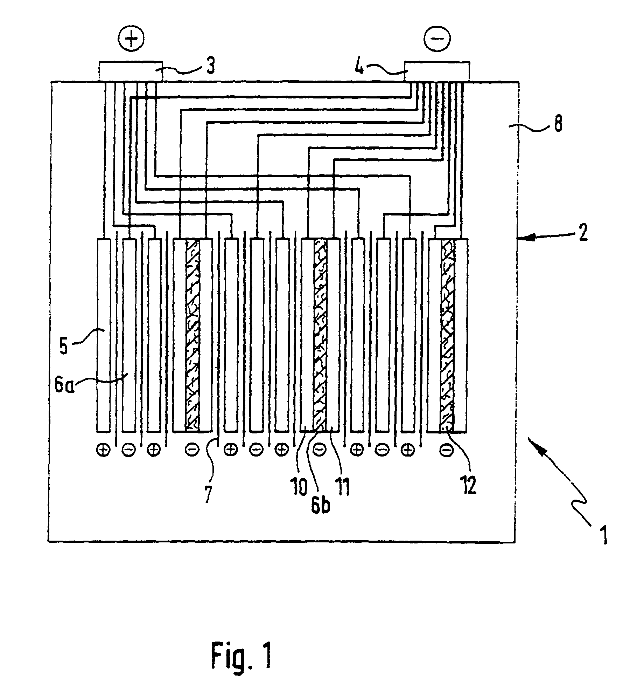

## Patentansprüche

1. Elektrode mit Speichervermögen für Wasserstoff, mit einem metallischen Trägermaterial, auf welches eine aktive Masse aufgebracht ist,
**dadurch gekennzeichnet,**
**daß** die aktive Masse aus einer Paste erhältlich ist, die aus einem Trockenanteil und einem flüssigen Anteil besteht, wobei der Trockenanteil aus einer Mischung aus einer pulverförmigen Speicherlegierung für Wasserstoff, Ruß und Polytetrafluorethylen (PTFE) besteht, wobei die Partikel der Speicherlegierung fibrillenartig mit PTFE überzogen sind, und der flüssige Anteil aus einer Mischung aus Wasser und einem höheren Alkohol mit 3 bis 6 C-Atomen besteht.

2. Elektrode nach Anspruch 1,
**dadurch gekennzeichnet,**
**daß** im Trockenanteil etwa 85 bis 95 Teile der Speicherlegierung für Wasserstoff, 2 bis 10 Teile Ruß und 3 bis 8 Teile PTFE enthalten sind.

3. Elektrode nach einem der vorhergehenden Ansprüche,
**dadurch gekennzeichnet,**
**daß** im flüssigen Anteil 30 bis 70 Volumenteile Wasser und 70 bis 30 Volumenteile des Alkohols sowie 0,05 bis 0,2 % (bezogen auf den Trockenanteil) PEG enthalten sind.

4. Elektrode nach einem der vorhergehenden Ansprüche,
**dadurch gekennzeichnet,**
**daß** im flüssigen Anteil ferner Polyethylenglycol (PEG) enthalten ist.

5. Elektrode nach Anspruch 4,
**dadurch gekennzeichnet,**
**daß** das PEG ein Molekulargewicht zwischen 10⁵ und 5×10⁶ g/mol aufweist.

6. Elektrode nach einem der vorhergehenden Ansprüche,
**dadurch gekennzeichnet,**
**daß** im flüssigen Anteil als Alkohol n-Propanol und/oder n-Butanol enthalten ist.

7. Elektrode nach einem der vorhergehenden Ansprüche,
**dadurch gekennzeichnet,**
**daß** das Massen-Verhältnis des Trockenanteils zum flüssigen Anteil 4:1 bis 6:1 beträgt.

8. Verfahren zur Herstellung einer Elektrode mit Speichervermögen nach einem der Ansprüche 1 bis 7,
**dadurch gekennzeichnet,**
**daß** ein Trockenanteil bestehend aus einer Mischung aus einer Speicherlegierung für Wasserstoff, Ruß und Polytetrafluorethylen (PTFE) und ein flüssiger Anteil bestehend aus einer Mischung aus Wasser und einem höheren Alkohol mit 3 bis 6 C-Atomen verwendet werden, der Trockenanteil und der flüssige Anteil bis zur Entstehung einer zusammenhängenden Paste in einem Kneter gemischt werden, und die resultierende Paste mit einem metallischen Trägermaterial vereinigt und getrocknet wird.

9. Verfahren nach Anspruch 8,
**dadurch gekennzeichnet,**
**daß** als Trockenanteil eine Mischung aus etwa 85 bis 95 Teilen der Speicherlegierung für Wasserstoff, 2 bis 10 Teilen Ruß und 3 bis 8 Teilen PTFE verwendet wird.

10. Verfahren nach einem der Ansprüche 7 bis 9,
**dadurch gekennzeichnet,**
**daß** als flüssiger Anteil eine Mischung aus 30 bis 70 Volumenteilen Wasser und 70 bis 30 Volumenteilen des Alkohols sowie 0,05 bis 0,2 % (bezogen auf den Trockenanteil) PEG verwendet wird.

11. Verfahren nach einem der Ansprüche 7 bis 10,
**dadurch gekennzeichnet,**
**daß** als flüssiger Anteil eine Mischung verwendet wird, welche ferner Polyethylenglycol (PEG) enthält.

12. Verfahren nach Anspruch 11,
**dadurch gekennzeichnet,**
**daß** PEG mit einem Molekulargewicht zwischen 10⁵ und 5×10⁶ g/mol verwendet wird.

13. Verfahren nach einem der Ansprüche 8 bis 12,
**dadurch gekennzeichnet,**
**daß** als Alkohol n-Propanol und/oder n-Butanol verwendet wird.

14. Verfahren nach einem der Ansprüche 8 bis 13,
**dadurch gekennzeichnet,**
**daß** der Trockenanteil und der flüssige Anteil im Massen-Verhältnis von etwa 4:1 bis 6:1 gemischt werden.

15. Verfahren nach einem der Ansprüche 8 bis 14,
**dadurch gekennzeichnet,**
**daß** die resultierende Paste zu einem Fell verdichtet, vorzugsweise gewalzt wird, welches nach der Trocknung als aktive Masse mit dem Trägermaterial vereinigt wird.

16. Verfahren nach einem der Ansprüche 8 bis 14,
**dadurch gekennzeichnet,**
**daß** die resultierende Paste direkt auf das Trägermaterial aufgetragen wird, vorzugsweise durch Walzen, und anschließend getrocknet wird, um die aktive Masse zu erhalten.

17. Verwendung einer Elektrode nach einem der Ansprüche 1 bis 7 als negative Elektrode in alkalischen Akkumulatoren mit positiver Nickeloxidelektrode.

## Claims

1. Electrode with a capacity for storing hydrogen, having a metallic substrate material to which an active compound is applied,
**characterised in that**
the active compound is obtained from a paste consisting of a dry element and a liquid element, the dry element consists of a mixture of a powdered hydrogen-storing alloy, carbon black and polytetrafluoroethylene (PTFE) in which the particles of the storing alloy are coated with PTFE in a fibrillated arrangement, and the liquid element consists of a mixture of water and a higher alcohol with 3 to 6 C atoms.

2. Electrode as claimed in claim 1,
**characterised in that**
the dry element contains approximately 85 to 95 parts of the hydrogen-storing alloy, 2 to 10 parts of carbon black and 3 to 8 parts of PTFE.

3. Electrode as claimed in one of the preceding claims,
**characterised in that**
the liquid element contains 30 to 70 parts by volume of water and 70 to 30 parts by volume of the alcohol, as well as 0.05 to 0.2% (by reference to the dry element) of PEG.

4. Electrode as claimed in one of the preceding claims,
**characterised in that**
the liquid element also contains polyethylene glycol (PEG).

5. Electrode as claimed in claim 4,
**characterised in that**
the PEG has a molecular weight of between 10⁵ and 5x10⁶ g/mol.

6. Electrode as claimed in one of the preceding claims,
**characterised in that**
the alcohol contained in the liquid element is n-propanol and/or n-butanol.

7. Electrode as claimed in one of the preceding claims,
**characterised in that**
the mass ratio of dry element to liquid element is 4:11 to 6:1.

8. Method of producing an electrode with storage capacity as claimed in one of claims 1 to 7,
**characterised in that**
a dry element consisting of a mixture of a hydrogen-storing alloy, carbon black and polytetrafluoroethylene (PTFE) and a liquid element consisting of a mixture of water and a higher alcohol with 3 to 6 C atoms is used, the dry element and the liquid element being mixed in a kneader until a cohesive paste is formed, and the resultant paste is joined to a metallic substrate material and dried.

9. Method as claimed in claim 8,
**characterised in that**
a mixture of approximately 85 to 95 parts of the hydrogen-storing alloy, 2 to 10 parts of carbon black and 3 to 8 parts of PTFE is used as the dry element.

10. Method as claimed in one of claims 7 to 9,
**characterised in that**
a mixture of 30 to 70 parts by volume of water and 70 to 30 parts by volume of alcohol as well as 0.05 to 0.2% (by reference to the dry element) of PEG is used as the liquid element.

11. Method as claimed in one of claims 7 to 10,
**characterised in that**
a mixture which additionally contains polyethylene glycol (PEG) is used as the liquid element.

12. Method a claimed in claim 11,
**characterised in that**
PEG with a molecular weight of between 10⁵ and 5x10⁶ g/mol is used.

13. Method as claimed in one of claims 8 to 12,
**characterised in that**
the alcohol used is n-propanol and/or n-butanol.

14. Method as claimed in one of claims 8 to 13,
**characterised in that**
the dry element and the liquid element are mixed in a mass ratio of approximately 4:1 to 6:1.

15. Method as claimed in one of claims 8 to 14,
**characterised in that**
the resultant paste is compressed to a skin, preferably rolled, which is joined to the substrate material as an active compound after drying.

16. Method as claimed in one of claims 8 to 14,
**characterised in that**
the resultant paste is applied directly to the substrate material, preferably by rolling, and then dried in order to obtain the active compound.

17. Use of an electrode as claimed in one of claims 1 to 7 as a negative electrode in alkaline batteries with a positive nickel oxide electrode.

## Revendications

1. Électrode à capacité de stockage d'hydrogène avec un support métallique sur lequel une masse active est déposée, **caractérisée en ce que** la masse active peut être obtenue à partir d'une pâte, qui est constituée d'une partie sèche et d'une partie liquide, la partie sèche étant composée d'un mélange d'un alliage de stockage d'hydrogène pulvérulent, de suie et de polytétrafluoroéthylène (PTFE), les particules de l'alliage de stockage étant revêtues de PTFE à la manière de fibrilles, et la partie liquide étant composée d'un mélange d'eau et d'un alcool supérieur ayant de 3 à 6 atomes de C.

2. Électrode selon la revendication 1, **caractérisée en ce que** la partie sèche contient environ 85 à 95 parts d'alliage de stockage d'hydrogène, 2 à 10 parts de suie et 3 à 8 parts de PTFE.

3. Électrode selon l'une des revendications précédentes, **caractérisée en ce que** la partie liquide contient 30 à 70 parts en volume d'eau et 70 à 30 parts en volume de l'alcool ainsi que 0,05 à 0,2% (sur la partie sèche) de PEG.

4. Electrode selon l'une des revendications précédentes, **caractérisée en ce que** la partie liquide contient en outre du polyéthylène glycol (PEG).

5. Électrode selon la revendication 4, **caractérisée en ce que** le PEG présente un poids moléculaire situé entre 10⁵ et 5x10⁶ g/mol.

6. Électrode selon l'une des revendications précédentes, **caractérisée en ce que** la partie liquide contient comme alcool du n-propanol et/ou du n-butanol.

7. Électrode selon l'une des revendications précédentes, **caractérisée en ce que** le rapport massique de la partie sèche sur la partie liquide est situé entre 4 : 1 et 6 : 1.

8. Procédé de production d'une électrode à capacité de stockage selon l'une des revendications 1 à 7, **caractérisé en ce que** l'on utilise une partie sèche constituée d'un mélange d'un alliage de stockage d'hydrogène, de suie et de polytétrafluoroéthylène (PTFE) et d'une partie liquide constituée d'un mélange d'eau et d'un alcool supérieur ayant de 3 à 6 atomes de C, la partie sèche et la partie liquide sont mélangées dans un pétrisseur jusqu'à apparition d'une pâte liée et la pâte résultante est purifiée avec un support métallique et séchée.

9. Procédé selon la revendication 8, **caractérisé en ce que** l'on utilise comme partie sèche un mélange d'environ 85 à 95 parts de l'alliage de stockage d'hydrogène, 2 à 10 parts de suie et 3 à 8 parts de PTFE.

10. Procédé selon l'une des revendications 7 à 9, **caractérisé en ce que** l'on utilise comme partie liquide un mélange de 30 à 70 parts en volume d'eau et 70 à 30 parts en volume de l'alcool ainsi que 0,05 à 0,2% (sur la partie sèche) de PEG.

11. Procédé selon l'une des revendications 7 à 10, **caractérisé en ce que** l'on utilise comme partie liquide un mélange contenant en outre du polyéthylène glycol (PEG).

12. Procédé selon la revendication 11, **caractérisé en ce que** l'on utilise du PEG ayant un poids moléculaire situé entre 10⁵ et 5x10⁶ g/mol.

13. Procédé selon l'une des revendications 8 à 12, **caractérisé en ce que** l'on utilise comme alcool du n-propanol et/ou du n-butanol.

14. Procédé selon l'une des revendications 8 à 13, **caractérisé en ce que** la partie sèche et la partie liquide sont mélangées en un rapport massique d'environ 4 : 1 à 6 : : 1.

15. Procédé selon l'une des revendications 8 à 14, **caractérisé en ce que** la pâte résultante est compressée, de préférence laminée en une pellicule, qui est purifiée après séchage à titre de masse active avec le support.

16. Procédé selon l'une des revendications 8 à 14, **caractérisé en ce que** la pâte résultante est déposée, de préférence par laminage, directement sur le support, et ensuite séchée pour obtenir la masse active.

17. Utilisation d'une électrode, selon l'une des revendications 1 à 7, comme électrode négative dans des accumulateurs alcalins avec une électrode en oxyde de nickel positive.
